# EUROPÄISCHE PATENTANMELDUNG

(11) **EP 2 756 935 A1**
(43) Veröffentlichungstag der Anmeldung: **23.07.2014**
(21) Anmeldenummer: 13005150.1
(22) Anmeldetag: 30.10.2013
(51) Int. Cl.: B25J 11/00, B25J 13/08, B25J 19/06

(54) **Roboter mit einer Handhabungseinheit**

(30) Priorität: 22.01.2013 DE 102013001110
(71) Anmelder: Weber Maschinenbau GmbH Breidenbach, 35236 Breidenbach (DE)
(72) Erfinder: Kuhmichel, Christoph, 57319 Bad Berleburg (DE)
(74) Vertreter: Grünecker, Kinkeldey, Stockmair & Schwanhäusser

(57) **Zusammenfassung**

Die Erfindung betrifft einen Roboter zum Aufnehmen eines Lebensmittelproduktes von einer Auflage und zum Verlagern an einen gewünschten Ort, mit wenigstens einem Roboterarm mit einer Handhabungseinheit, um das Lebensmittelprodukt aufzunehmen, wobei durch die Bewegung der Handhabungseinheit mittels des Roboterarms das Lebensmittelprodukt verlagerbar ist. Zwischen dem Roboterarm (2) und der Handhabungseinheit (6) ist ein Sensor (5), insbesondere ein Kraftsensor, vorgesehen, mit welchem die zwischen dem Roboterarm (2) und der Handhabungseinheit (6) wirkende Kraft in wenigstens einer Richtung erfassbar ist. Die Erfindung betrifft weiterhin ein Verfahren zum Betrieb eines Roboters zum Verlagern eines Lebensmittelproduktes.

## Beschreibung

Die Erfindung betrifft einen Roboter gemäß dem Oberbegriff des Hauptanspruches. Ein solcher ist beispielsweise aus dem europäischen Patent 2 168 892 bekannt. Zum Aufnehmen und Verlagern des Produktes dient ein Roboterarm, der mit einer Handhabungseinheit in Form eines Greifers versehen ist.

Roboter sind eine große Hilfe beim automatischen Handhaben von Produkten während der Produktion, da sie in der Regel schnell und zuverlässig arbeiten. Es kommt jedoch vor, dass in den Bewegungsabläufen des Roboters Störungen eintreten, die im schlimmsten Fall zu einer Störung des Roboters führen. Solche Störungen können mechanische Hindernisse sein. Um den Schaden bei mechanischen Störungen zu begrenzen, ist es beispielsweise möglich, dass sich der Roboterarm oder auch die Handhabungseinheit zerlegt, wenn sie auf ein Hindernis stößt. Dies bedeutet jedoch eine Unterbrechung der Arbeitsabläufe.

Der Erfindung liegt die Aufgabe zugrunde, einen Roboter der eingangs genannten Art zu schaffen, bei dem auf einfache und zuverlässige Weise im Kollisionsfall der körperliche Schaden, sowie die Betriebsunterbrechung minimiert werden.

Diese Aufgabe wird erfindungsgemäß durch das Kennzeichen des Hauptanspruches gelöst. Der Sensor dient mehreren Zwecken. Er kann als Kraft- und/oder Beschleunigungssensor ausgebildet sein. Zum einen kann er benutzt werden, um ein sanftes Aufnehmen, aber auch sanftes Verlagern und Abgeben des Lebensmittelproduktes zu erreichen. Zum anderen dient der Sensor auch der Minimierung der Einflüsse einer Kollision, er misst die bei den Bewegungsabläufen auf ihn einwirkenden Kräfte. Es können Steuerbefehle abgeleitet werden, um das Aufnehmen, das Beschleunigen beim Verlagern und die Abgabe, soweit wie möglich schonend vorzunehmen.

Im Falle einer Kollision erfasst der Sensor die Störgröße und bestimmt die sofortige Abschaltung der Bewegungsvorgänge. Hierdurch wird eine Zerstörung der mechanischen, elektrischen, elektronischen und sonstigen Teile des Roboters verhindert.

Der Sensor kann darüber hinaus noch zum Wiegen der Lebensmittel herangezogen werden. Es ist auch denkbar, ihn für das Überwachen und Einstellen der Andrückkraft der Handhabungseinheit auf der Auflage heranzuziehen. Im praktischen Fall bedeutet dies, dass beim Heranführen der Handhabungseinheit an die Auflage ein präzises Ansteuern der Handhabungseinheit, bzw. der entsprechenden Greifer an die optimale Greifposition möglich ist. Dies kann durch Programmieren oder auch durch "selbsttätiges Lernen" des Roboters erfolgen.

Bei einer Weiterbildung der Erfindung ist vorgesehen, dass der Sensor horizontale und/oder vertikale Kraftkomponenten und/oder Beschleunigungen erfasst.

Der Sensor kann in einem separaten Aufnahmeelement angeordnet sein, das dem Roboterarm zugeordnet ist. Bevorzugt ist eine lösbare Anordnung der Handhabungseinheit bzw. des Sensors.

Der Sensor kann Teil einer Sensoreinrichtung sein, die mittels eines Datenspeichers die vom Sensor ermittelten Signale unter die zugehörige Zeit aufzeichnen kann.

Die Sensoreinrichtung kann ausgelegt sein, um die akkumulierte, mechanische Belastung des Roboters aus dem Kraft-Zeit-Verlauf zu berechnen, und entsprechende Wartungsintervalle anzuzeigen.

Als Handhabungseinheit kann ein Greifer verwendet werden, der das Lebensmittelprodukt untergreift. Der Roboter kann ein Delta-Roboter sein.

Die eingangs gestellte Aufgabe wird auch durch ein Verfahren gelöst, bei dem folgende Schritte vorgesehen sind:
- Aufnehmen des Lebensmittelprodukts mit einer Handhabungseinheit, die an einem Roboterarm vorgesehen ist,
- Bewegen der Handhabungseinheit mittels des Roboterarms, sodass das Lebensmittelprodukt zu einem gewünschten Ort verlagert wird, und
- Ablegen des Lebensmittelproduktes.

Es ist vorgesehen, dass die zwischen dem Roboterarm und der Handhabungseinheit wirkende Kraft in eine Richtung erfasst wird. Dies gilt insbesondere für den Zeitpunkt, wenn die Handhabungseinheit auf die Auflage des Lebensmittelproduktes aufsetzt. Dabei wird der Zweck verfolgt, die Aufsetzkraft der Handhabungseinheit bzw. des dazugehörigen Greifers beim Aufsetzen zu minimieren. Um die Bewegungsabläufe zu optimieren und Schaden durch Störungen zu vermeiden, ist es günstig, wenn die Bewegung des Roboters gestoppt wird, wenn die vom Sensor ermittelte Kraft einen Grenzwert übersteigt. Der von dem Datenspeicher aufgezeichnete Kraft-Zeit-Verlauf kann zur Auslegung der mechanischen Stabilität des Roboters verwendet werden.

Die Erfindung ist anhand einer Zeichnung beschrieben. Es zeigen:
- Figur 1: eine schematische Seitenansicht eines Roboters, dessen Handhabungseinheit auf ein Hindernis stößt, und
- Figur 2: eine Seitensicht des Roboters von Figur 1 mit einem untergriffenen Lebensmittelprodukt.

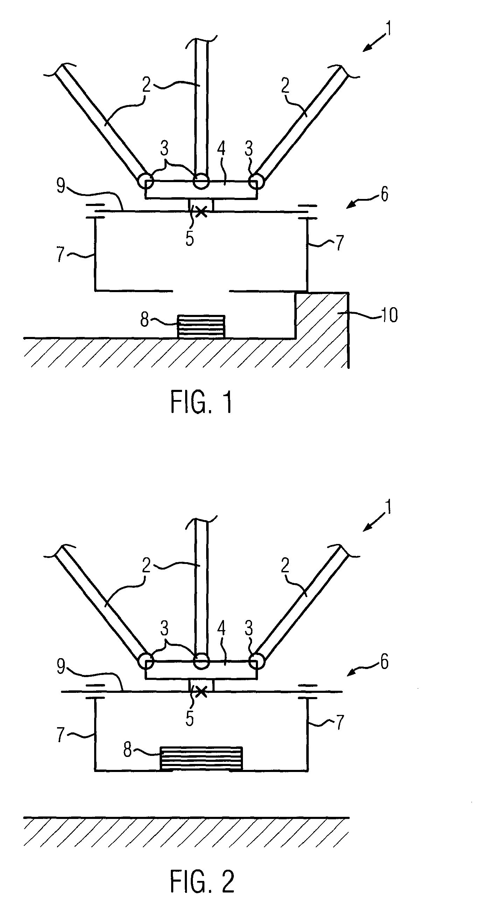

Der in Figur 1 gezeigte Roboter 1 wird üblicherweise als Deltaroboter angesprochen. Er verfügt über drei Roboterarme 2, die an ihrem unteren Ende über Gelenke 3 mit einer Grundplatte 4 verbunden sind, die als Aufnahmeelement dient. An der Grundplatte 4 ist z. B. ein Kraftsensor 5 angeordnet, der Teil einer nicht gezeigten Sensoreinrichtung darstellt, die unter anderem einen Datenspeicher, eine Auswerteeinheit usw. umfasst.

An dem Kraftsensor 5 ist eine Handhabungseinheit 6 befestigt, die mittels Greifer 7 ein Lebensmittelprodukt 8 greifen soll.

Im vorliegenden Fall ist am Kraftsensor 5 eine horizontale Halterung 9 angeordnet, an der die Greifer 7 horizontal verschiebbar gelagert sind. Die Greifer selbst sind als winkelige Träger ausgebildet, die sich zum Ergreifen des Lebensmittelproduktes 8 in horizontaler Richtung aufeinander zu bewegen können. Beim Ablegen fahren die Greifer auseinander.

Der Roboter wird in den Figuren 1 und 2 zusammen mit seinen Teilen nur schematisch gezeigt. Es gibt viele mögliche Ausführungsformen, für die Roboterarme, die Gelenke, die Grundplatte usw. Die Erfindung ist nicht auf diese schematischen Darstellungen beschränkt.

Der Roboter 1 dient zum Aufnehmen des Lebensmittelproduktes 8 und zum Verlagern desselben von der Aufnahmeposition in eine nicht gezeigte Abgabeposition. Hierzu wird der Roboter so gesteuert, dass die Greifer 7 der Handhabungseineheit 6 sich von oben oder von der Seite her dem Lebensmittelprodukt nähern, und möglichst sanft das Produkt untergreifen, um es anschließend durch Bewegen der Handhabungseinheit örtlich zu verlagern.

Der Kraftsensor 5 befindet sich zwischen dem Roboter 1 und der Handhabungseinheit 6 und ist damit in der Lage, sowohl den Bewegungsablauf des Roboters als auch der Handhabungseinheit 6 bzw. des davon untergriffenen Lebensmittelprodukts 8 zu erfassen. Der Kraftsensor kann alle Kraftkomponenten in XYZ-Richtung ermitteln, oder nur auf bestimmte Kraftkomponenten abgestellt sein. Er übermittelt seine Messwerte vorzugsweise an seine Sensoreinrichtung, die nach Belieben ausgestattet sein kann. Sie vermag einen Datenspeicher aufweisen, eine Auswerteeinheit, eine Anzeigeneinrichtung usw. Mit Hilfe des Datenspeichers können die vom Kraftsensor ermittelten Messwerte in verschiedenen Hinsichten ausgewertet werden, so ist z. B. ein Diagramm Kraft/Zeit möglich. Der Kraftsensor kann nicht nur zur Überwachung des Bewegungsablaufes des Roboters herangezogen werden, sondern auch zur Optimierung der Produktion, der Sanftheit der Aufnahme und Abgabe des Lebensmittelproduktes, aber auch zum Erfassen von Störungsfällen.

In Figur 1 ist ein derartiger Störungsfall symbolisch gezeigt. Der rechte Greifer 7 stößt gegen ein Hindernis 10. Der Kraftsensor 5 erfasst dieses Hindernis, z. B. wenn die von ihm ermittelte Kraft einen Grenzwert übersteigt, wodurch die besagte Störung wahrgenommen wird.

Bedingt durch die Reaktion des Kraftsensors kann die weitere Bewegung des Roboters bzw. dessen Arme, bzw. die Handhabungseinheit gestoppt werden. Eine Beschädigung des Roboters und seiner Teile wird verhindert.

Der Kraftsensor kann aber nicht nur zur Überwachung und Überprüfung des Bewegungsablaufes des Roboters, bzw. der Produktion herangezogen werden, sondern auch zur Erfassung von Abnutzungen und Schäden der Roboterteile. Er dient damit neben der Kollisionsdetektion der Schadensakkumulation und zeigt z. B. an, wann eine Wartung fällig ist.

Schließlich kann der Sensor 5 noch dazu dienen, das Gewicht des Lebensmittelproduktes zu ermitteln, durch Anheben desselben, oder durch Messung der Beschleunigung. Schließlich ist es auch noch möglich mit Hilfe der vom Kraftsensor ermittelten Werte die mechanische Stabilität des Roboters zur Überprüfung ggf. zu verändern, um die Verwendung zu verbessern.

## Patentansprüche

1. Roboter zum Aufnehmen eines Lebensmittelproduktes von einer Auflage und zum Verlagern an einen gewünschten Ort, mit
wenigstens einem Roboterarm, an dem eine Handhabungseinheit vorgesehen ist, die ausgelegt ist, das Lebensmittelprodukt aufzunehmen,
wobei durch Bewegen der Handhabungseinheit mittels des Roboterarms das Lebensmittelprodukt verlagerbar ist,
**dadurch gekennzeichnet, dass**
zwischen dem Roboterarm (2) und der Handhabungseinheit (6) ein Sensor (5), insbesondere ein Kraftsensor vorgesehen ist, mit welchem die zwischen dem Roboterarm (2) und der Handhabungseinheit (6) wirkende Kraft in wenigstens einer Richtung erfassbar ist.

2. Roboter nach Anspruch 1, wobei durch den Sensor (5) eine vertikale und/oder horizontale Kraftkomponente, bzw. Beschleunigung erfassbar ist.

3. Roboter nach Anspruch 1, wobei der Sensor (5) ausgelegt ist, die Kraft und/oder die Beschleunigung in der vertikalen Richtung und in wenigstens einer horizontalen Richtung zu erfassen.

4. Roboter nach einem der vorangehenden Ansprüche, wobei der Sensor (5) fest an einem Aufnahmeelement (4) angeordnet ist, an dem wenigstens einen Roboterarm (2) angeordnet ist, wobei die Handhabungseinheit (6) lösbar am Kraftsensor (5) befestigt ist.

5. Roboter nach einem der vorangehenden Ansprüche, wobei eine Sensoreinrichtung vorgesehen ist, die einen Datenspeicher aufweist, wobei die Sensoreinrichtung ausgelegt ist, den Verlauf des von dem Sensor (5) ermittelten Signals über die Zeit in dem Datenspeicher aufzuzeichnen.

6. Roboter nach Anspruch 5, wobei die Sensoreinrichtung ausgelegt ist, die akkumulierte mechanische Belastung des Roboters aus dem Kraft-Zeit Verlauf zu berechnen und adaptive Wartungsintervalle entsprechend anzuzeigen.

7. Roboter nach einem der vorangehenden Ansprüche, wobei die Handhabungseinheit (6) eine Greifereinheit (7) ist, die das Lebensmittelprodukt untergreift.

8. Roboter nach einem der vorangehenden Ansprüche, wobei der Roboter (1) ein Delta-roboter ist.

9. Verfahren zum Betrieb eines Roboters zum Verlagern eines Lebensmittelproduktes, umfassend die Schritte:
i) Aufnehmen des Lebensmittelprodukts mit einer Handhabungseinheit, die an einem Roboterarm vorgesehen ist,
ii) Bewegen der Handhabungseinheit mittels des Roboterarms, sodass das Lebensmittelprodukt zu einem gewünschten Ort verlagert wird, und
iii) Ablegen des Lebensmittelprodukts,
**gekennzeichnet durch**
Erfassen der zwischen dem Roboterarm und der Handhabungseinheit wirkenden Kraft, bzw. Beschleunigung in wenigstens einer Richtung.

10. Verfahren nach Anspruch 9, **gekennzeichnet durch** Erfassen der Kraft beim Aufsetzen der Handhabungseinheit auf eine Bereitstellungseinheit für das Lebensmittelprodukt.

11. Verfahren nach Anspruch 9 oder 10, **gekennzeichnet durch** Erfassen der Kraft während der Beschleunigung der Handhabungseinheit und Ermitteln des Gewichts des Lebensmittelproduktes aus dieser Kraft.

12. Verfahren nach einem der Ansprüche 9 bis 11, **gekennzeichnet durch** Stoppen der Bewegung des Roboters, wenn die ermittelte Kraft und/oder Beschleunigung einen Grenzwert übersteigt.

13. Verfahren nach einem der Ansprüche 9 bis 12, wobei in Abhängigkeit der ermittelten Kraft die Trajektorie der Handhabungseinheit angepasst wird.

14. Verfahren nach einem der Ansprüche 9 bis 13, wobei die ermittelte Kraft über die Zeit aufgezeichnet wird.

15. Verfahren nach Anspruch 14, wobei der Kraft-Zeit-Verlauf zur Auslegung der mechanischen Stabilität des Roboters verwendet wird.
